(19) Europäisches Patentamt
European Patent Office
Office européen des brevets

(11) **EP 0 799 280 B1**

(12) **FASCICULE DE BREVET EUROPEEN**

(45) Date de publication et mention de la délivrance du brevet:
**19.03.2003 Bulletin 2003/12**

(21) Numéro de dépôt: **96934920.8**

(22) Date de dépôt: **16.10.1996**

(51) Int Cl.[7]: **C08L 95/00**, C10C 3/02, C08G 81/02
// (C08L95/00, 53:02)

(86) Numéro de dépôt international:
**PCT/FR96/01614**

(87) Numéro de publication internationale:
**WO 97/014754 (24.04.1997 Gazette 1997/18)**

(54) **PROCEDE DE PREPARATION DE COMPOSITION BITUME/ELASTOMERE, LEUR APPLICATION COMME REVETEMENT ROUTIER**

VERFAHREN ZUR HERSTELLUNG VON BITUMEN-ELASTOMER-ZUSAMMENSETZUNGEN, IHRE VERWENDUNG ZUR STRASSENBESCHICHTUNG

METHOD FOR PREPARING A BITUMEN/ELASTOMER COMPOSITION, AND USE THEREOF AS A ROAD SURFACING

(84) Etats contractants désignés:
**AT BE CH DE DK ES FI FR GB GR IE IT LI LU MC NL PT SE**
Etats d'extension désignés:
**LT LV**

(30) Priorité: **19.10.1995 FR 9512276**

(43) Date de publication de la demande:
**08.10.1997 Bulletin 1997/41**

(73) Titulaire: **Société Anonyme dite : ELF ANTAR FRANCE**
**92400 Courbevoie (FR)**

(72) Inventeurs:
- **PLANCHE, Jean-Pascal**
**F-38540 Saint-Just-Chaleyssin (FR)**
- **GERMANAUD, Laurent**
**F-38540 Heyrieux (FR)**
- **ZINS, Annie**
**F-38200 Seyssuel (FR)**

(74) Mandataire: **Jolly, Jean-Pierre**
**Cabinet Jolly**
**54, rue de Clichy**
**75009 Paris (FR)**

(56) Documents cités:
**EP-A- 0 360 656**
**WO-A-93/18092**
**FR-A- 2 265 823**
**FR-A- 2 528 439**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un procédé de préparation de compositions bitume/élastomère fonctionnalisé, à large intervalle de plasticité. Elle se rapporte encore à l'application des compositions obtenues à la réalisation de revêtements et en particulier de revêtements superficiels routiers, d'enrobés ou encore de revêtements d'étanchéité et elle a trait également à une solution mère utilisable pour la préparation desdites compositions.

Dans la citation US-A-4011184, on décrit un procédé de préparation de compositions bitume/élastomère fonctionnalisé, dont l'un des modes de réalisation consiste à mettre en contact, en opérant à des températures comprises entre 100 °C et 200 °C et sous agitation, un bitume avec un élastomère, particulièrement un copolymère séquencé de styrène et d'un diène conjugué, en quantité représentant 0,1 % à 25 % et tout spécialement 1 % à 5 % en poids du bitume, et un acide carboxylique insaturé éthyléniquement ou un anhydride d'un tel acide, par exemple anhydride maléique, en proportion correspondant à 0,5 % à 10 % du poids de bitume et d'élastomère, ledit contact étant maintenu pendant un temps suffisant pour produire au sein du bitume un élastomère fonctionnalisé portant des groupements fonctionnels acide carboxylique ou anhydride d'acide carboxylique propres à créer directement, par formation de liaisons hydrogène, ou par addition d'un agent salifiant susceptible de réagir avec les groupements carboxyliques, des pontages tbermoréversibles entre les chaînes macromoléculaires de l'élastomère et/ou entre lesdites chaînes macromoléculaires et le bitume.

Les compositions bitume/élastomère fonctionnalisé obtenues comme indiqué ci-dessus sont moins susceptibles aux phénomènes de gélification que les compositions bitume/élastomère produites par réticulation, par le soufre, d'élastomères tels que, notamment, des copolymères séquencés de styrène et d'un diène conjugué comme le butadiène ou l'isoprène au sein d'un bitume. On peut de ce fait produire des compositions bitume/élastomère fonctionnalisé ayant une teneur élevée en élastomère et pouvant jouer le rôle de concentrés. Ces compositions sont plus économiques à préparer, à stocker et à transporter que les compositions correspondantes à teneur plus faible en élastomère et elles peuvent être facilement diluées au moment de l'utilisation, par addition de bitume, pour former les liants bitume/élastomère à teneur plus faible en élastomère qui sont utilisés habituellement pour la réalisation de revêtements et en particulier de revêtements routiers.

Toutefois, les compositions bitume/élastomère fonctionnalisé, préparées en utilisant la technique mentionnée plus haut décrite dans la citation US-A-4011184, ne possèdent qu'un taux limité de groupements fonctionnels carboxyliques fixés aux chaînes macromoléculaires de l'élastomère associé au bitume et susceptibles d'induire des réticulations ou pontages desdites chaînes entre elles ou/et avec le bitume, directement ou après addition de l'agent salifiant. De ce fait les caractéristiques physico-mécaniques de telles compositions, notamment intervalle de plasticité (différence entre la température de ramollissement bille et anneau et le point de fragilité Fraass) et caractéristiques mécaniques aux basses températures d'utilisation, ne sont pas entièrement satisfaisantes.

On a maintenant trouvé que l'on pouvait obtenir, par la technique précitée, des compositions bitume/élastomère fonctionnalisé présentant un intervalle de plasticité élargi et des caractéristiques mécaniques améliorées en traction, en utilisant un agent de fonctionnalisation particulier pour introduire, dans l'élastomère et éventuellement dans le bitume, les groupements fonctionnels carboxyliques ou dérivés induisant les réticulations.

L'invention a donc pour objet un procédé de préparation de compositions bitume/élastomère fonctionnalisé à large intervalle de plasticité, du type dans lequel on met en contact, en opérant à des températures comprises entre 100 °C et 230 °C et sous agitation, pendant une durée d'au moins dix minutes, un bitume ou mélange de bitumes avec, comptés en poids du bitume, entre 0,5 % et 25 %, plus particulièrement entre 1 % et 15 %, d'un élastomère et entre 0,01 % et 6 %, plus spécialement entre 0,05 % et 3 %, d'un agent de fonctionnalisation, ledit procédé se caractérisant en ce que l'agent de fonctionnalisation consiste en au moins un composé répondant à l'une ou l'autre des formules

$$\text{(a)}\quad (XOOC)_x - \underset{(SH)_z}{\underset{|}{R_1}} - S - S - \underset{(SH)_z}{\underset{|}{R_1}} - (COOX)_x,$$

$$\text{(b)}\quad HS - \underset{(SH)_z}{\underset{|}{R_1}} - (COOR)_x \quad \text{et} \quad \text{(c)}\quad HS - \underset{(SH)_t}{\underset{|}{R_2}} - (COOH)_x,$$

dans lesquelles X représente un atome d'hydrogène ou un radical R, chaque $R_1$ désigne un radical hydrocarboné (x+z+1)- valent en $C_1$ à $C_{12}$, de préférence en $C_1$ à $C_8$, R représente un radical hydrocarboné monovalent en $C_1$ à $C_{12}$, de préférence en $C_1$ à $C_8$, $R_2$ désigne un radical hydrocarboné (x+t+1)- valent en $C_2$ à $C_{12}$, de préférence en $C_2$

à $C_8$, t est zéro ou 1, chaque x désigne un nombre entier ayant une valeur allant de 1 à 3, de préférence égale à 1 ou 2, et z est zéro ou 1, avec $x+z \leq 3$.

Dans la formule (a) définissant des disulfures, les symboles $R_1$ peuvent être identiques ou différents. Il en va de même des symboles X, des symboles x et des symboles z.

Avantageusement, l'agent de fonctionnalisation est choisi parmi les disulfures de formule (a) et, en particulier, parmi ceux desdits disulfures qui sont représentés par une formule (a) pour laquelle z est égal à zéro. Parmi ces disulfures particuliers de formule $(XOOC)_x - R_3 - S - S - R_3 - (COOX)_x$, où X désigne H ou un radical R précité, x est un nombre entier allant de 1 à 3, de préférence égal à 1 ou 2, et $R_3$ représente un radical hydrocarboné (x+1)- valent en $C_1$ à $C_{12}$ et de préférence en $C_1$ à $C_8$, conviennent tout spécialement ceux répondant à la formule suivante $(HOOC)_x$-$R_3$-S-S-$R_3$-$(COOH)_x$.

Les radicaux hydrocarbonés (x+z+1) valents $R_1$ et (x+1) valents $R_3$ peuvent être des radicaux aliphatiques saturés, linéaires ou ramifiés, en $C_1$ à $C_{12}$, de préférence en $C_1$ à $C_8$ et tout spécialement en $C_1$ à $C_6$, des radicaux aliphatiques insaturés, linéaires ou ramifiés, en $C_2$ à $C_{12}$, de préférence en $C_2$ à $C_8$ et tout spécialement en $C_2$ à $C_6$, des radicaux cycloaliphatiques en $C_4$ à $C_{12}$, de préférence en $C_6$ à $C_8$ ou des radicaux aromatiques en $C_6$ à $C_{12}$, de préférence en $C_6$ à $C_8$.

De même, les radicaux hydrocarbonés (x+t+1)-valents $R_2$ peuvent être des radicaux aliphatiques saturés, linéaires ou ramifiés, en $C_2$ à $C_{12}$, de préférence en $C_2$ à $C_8$ et tout spécialement en $C_2$ à $C_6$, des radicaux aliphatiques insaturés, linéaires ou ramifiés, en $C_2$ à $C_{12}$, de préférence en $C_2$ à $C_8$ et tout spécialement en $C_2$ à $C_6$, des radicaux cycloaliphatiques en $C_4$ à $C_{12}$, de préférence en $C_6$ à $C_8$ ou encore des radicaux aromatiques en $C_6$ à $C_{12}$, de préférence en $C_6$ à $C_8$. Quant aux radicaux hydrocarbonés monovalents R, ils peuvent consister en radicaux aliphatiques saturés, linéaires ou ramifiés, en $C_1$ à $C_{12}$ et de préférence en $C_1$ à $C_8$, en radicaux aliphatiques insaturés, linéaires ou ramifiés, en $C_2$ à $C_{12}$ et de préférence en $C_2$ à $C_8$, en radicaux cycloaliphatiques en $C_4$ à $C_{12}$ et de préférence en $C_6$ à $C_8$ ou encore en radicaux aromatiques en $C_6$ à $C_{12}$ et de préférence en $C_6$ à $C_8$. En particulier, les radicaux hydrocarbonés monovalents R sont des radicaux alkyles linéaires ou ramifiés en $C_1$ à $C_{12}$ et plus spécialement en $C_1$ à $C_8$ tels que méthyle, éthyle, propyle, butyle, hexyle, éthyle-2 hexyle, n-octyle, isooctyle.

Des exemples d'agent de fonctionnalisation utilisables dans le procédé selon l'invention sont tels que l'acide mercaptopropionique, l'acide mercaptobutanoique, l'acide mercaptosuccinique, l'acide dimercaptosuccinique, les esters éthylique, méthylique, isooctylique de l'acide thioglycolique, les esters éthylique, éthyle-2hexylique, n-octylique de l'acide mercaptopropionique, et tout spécialement les composés disulfures tels que l'acide dithio-2,2' diacétique de formule :

$$HOOC\text{-}CH_2\text{-}S\text{-}S\text{-}CH_2\text{-}COOH,$$

l'acide dithio-3,3' dipropionique de formule :

$$HOOC\text{-}CH_2\text{-}CH_2\text{-}S\text{-}S\text{-}CH_2\text{-}CH_2\text{-}COOH,$$

l'acide dithio-4,4' dibutanoique de formule :

$$HOOC\text{-}(CH_2)_3\text{-}S\text{-}S\text{-}(CH_2)_3\text{-}COOH,$$

et l'acide dithio-2,2' disalicylique de formule :

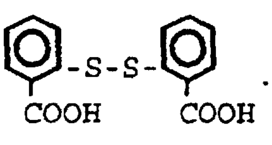

Le bitume ou mélange de bitumes, que l'on utilise dans la préparation des compositions bitume/élastomère fonctionnalisé, est choisi avantageusement parmi les divers bitumes qui possèdent une viscosité cinématique à 100 °C comprise entre $0,5 \times 10^{-4}$ m$^2$/s et $3 \times 10^{-2}$ m$^2$/s et de préférence entre $1 \times 10^{-4}$ m$^2$/s et $2 \times 10^{-2}$ m$^2$/s. Ces bitumes peuvent être des bitumes de distillation directe ou de distillation sous pression réduite ou encore des bitumes soufflés ou semi-soufflés, des résidus de désasphaltage au propane ou au pentane, voire même certaines coupes pétrolières ou des

mélanges de bitumes et de distillats sous vide ou encore des mélanges d'au moins deux des produits venant d'être énumérés. Avantageusement, le bitume ou mélange de bitumes utilisé dans le procédé selon l'invention, outre une viscosité cinématique comprise dans les intervalles précités, présente une pénétrabilité à 25 °C, définie suivant la norme NF T 66004, comprise entre 5 et 800 et de préférence entre 10 et 400.

L'élastomère, que l'on emploie dans le procédé selon l'invention et que l'on retrouve fonctionnalisé par des séquences à fonctionnalité acide carboxylique ou ester carboxylique dans les compositions bitume/élastomère fonctionnalisé issues dudit procédé, peut consister en un ou plusieurs polymères élastomériques tels que polyisoprène, polynorbornène, polybutadiène, caoutchouc butyle, copolymères statistiques éthylène/propylène (EP), terpolymères statistiques éthylène/propylène/diène (EPDM). Avantageusement, ledit élastomère est constitué en partie, la partie restante consistant en un ou plusieurs polymères tels que précités ou autres, ou en totalité d'un ou plusieurs copolymères statistiques ou séquencés de styrène et d'un diène conjugué tel que butadiène, isoprène, chloroprène, butadiène carboxylé, isoprène carboxylé, et plus particulièrement d'un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %. La masse moléculaire moyenne en poids du copolymère de styrène et de diène conjugué, et notamment celle des copolymères mentionnés ci-dessus, peut être comprise, par exemple, entre 10 000 et 600 000 daltons et se situe de préférence entre 30 000 et 400 000 daltons. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en poids situées dans les intervalles définis précédemment.

Si besoin est, pour faciliter la fixation des séquences fonctionnelles

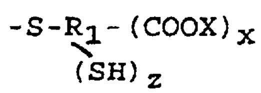 ou 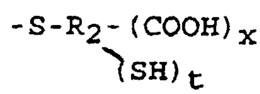

et plus particulièrement $-S-R_3-(COOX)_x$ et notamment $-S-R_3-(COOH)_x$, fournies par l'agent de fonctionnalisation, à l'élastomère et éventuellement au bitume, on peut ajouter un composé peroxydé, générateur de radicaux libres aux températures comprises entre 100 °C et 230 °C, au milieu réactionnel formé du bitume ou mélange de bitumes, de l'élastomère et de l'agent de fonctionnalisation. Ledit composé peroxydé, utilisé en quantité allant de 0 % jusqu'à, par exemple, 15 % en poids de l'élastomère, peut être, notamment, choisi parmi les peroxydes de dihydrocarbyle comme le peroxyde de ditertiobutyle et le peroxyde de dicumyle.

La mise en contact du bitume ou mélange de bitumes avec l'élastomère, l'agent de fonctionnalisation et, s'il est utilisé, le composé peroxydé, qui génère un produit de réaction constituant la composition bitume/élastomère fonctionnalisé, est réalisé avantageusement en incorporant tout d'abord l'élastomère au bitume ou mélange de bitumes, en utilisant une proportion d'élastomère ayant une valeur, par rapport au bitume, choisie comme défini précédemment pour cette proportion , en opérant à des températures comprises entre 100 °C et 230 °C, plus particulièrement entre 120 °C et 190 °C, et sous agitation, pendant une durée suffisante, généralement de l'ordre de quelques dizaines de minutes à quelques heures et, par exemple, de l'ordre de 30 minutes à 8 heures, pour former un mélange homogène de bitume et d'élastomère, puis en introduisant dans ledit mélange l'agent de fonctionnalisation et ensuite, s'il est utilisé, le composé peroxydé, en quantités appropriées choisies dans les intervalles définis précédemment pour lesdites quantités, et en maintenant le tout sous agitation à des températures comprises entre 100 °C et 230 °C, plus particulièrement entre 120 °C et 190 °C, et identiques ou non aux températures d'incorporation de l'élastomère au bitume ou mélange de bitumes, pendant une durée au moins égale à 10 minutes et généralement allant de 10 minutes à 5 heures, plus particulièrement de 30 minutes à 180 minutes, pour former le produit de réaction constituant la composition bitume/élastomère fonctionnalisé.

Le produit de réaction précité, issu de la mise en contact du bitume ou mélange de bitumes avec l'élastomère, l'agent de fonctionnalisation et, s'il est utilisé, le composé peroxydé, peut être avantageusement additionné, en opérant sous agitation à des températures comprises entre 100 °C et 230 °C et plus particulièrement entre 120 °C et 190 °C, d'un ou plusieurs additifs susceptibles de réagir avec les groupements fonctionnels carboxyliques ou esters carboxyliques portés par l'élascomère et éventuellement par le bitume pour activer ou renforcer la réticulation entre les chaînes macromoléculaires de l'élastomère ou/et entre lesdites chaînes macromoléculaires et le bitume et ainsi renforcer les caractéristiques physicomécaniques de la composition bitume/élastomère fonctionnalisé. Ces additifs réactifs peuvent être en particulier des amines, notamment polyamines, primaires ou secondaires, des alcools, des amino-alcools, des époxydes ou encore des composés métalliques.

Des additifs réactifs du type amine sont, par exemple, des diamines aromatiques telles que diamino-1,4 benzène, diamino-2,4 toluène, diaminonaphtalène, bis(amino-4 phényl) sulfone, bis(amino-4 phényl) éther, bis(amino-4 phényl) méthane, des diamines aliphatiques ou cycloaliphatiques telles que celles de formule $H_2N-R_4-NH_2$ où $R_4$ désigne un radical alkylène en $C_2$ à $C_{12}$, ou cycloalkylène en $C_6$ à $C_{12}$, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyl ou alkényl en $C_{12}$ à $C_{18}$ relié à l'atome d'azote d'un groupement amine.

Des additifs réactifs du type alcool sont, en particulier, des polyols tels que diols ou triols et notamment des diols de formule $HO-R_5-OH$, où $R_5$ désigne un radical hydrocarboné, notamment un radical alkylène en $C_2$ à $C_{18}$, arylène en $C_6$ à $C_8$ et cycloalkylène en $C_6$ à $C_8$, et des polyétherdiols de formule $HO\,[C_qH_{2q}O]_r\,H$ où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octanediol, polybutadiène polyhydroxylé.

Des additifs réactifs du type composé métallique sont, en particulier, des composés tels que hydroxydes, oxydes, alcoolates, carboxylates comme formiates et acétates, méthoxydes, éthoxydes, nitrites, carbonates et bicarbonates de métaux des groupes I, II, III ou VIII du Tableau Périodique des Eléments, notamment Na, K, Li, Mg, Ca, Cd, Zn, Ba, Al, Fe.

La quantité de l'additif réactif ou des additifs réactifs, que l'on incorpore au produit de réaction constituant la composition bitume/élastomère fonctionnalisé et résultant de la mise en contact du bitume ou mélange de bitumes avec l'élastomère, l'agent de fonctionnalisation et, s'il est utilisé, le composé peroxydé, peut aller de 0,01 % à 10 % et plus particulièrement de 0,05 % à 5 % du poids de bitume présent dans ledit produit de réaction. Avantageusement, ladite quantité est comprise entre une fois et quatre fois la quantité stoechiométrique correspondant à une réaction complète de l'additif réactif ou des additifs réactifs avec les groupements fonctionnels portés par l'élastomère fonctionnalisé.

Le milieu réactionnel générant le produit de réaction précité constituant la composition bitume/élastomère fonctionnalisé ou ledit produit de réaction lui-même peut-être encore additionné, en opérant sous agitation à des températures comprises entre 100 °C et 230 °C et plus particulièrement entre 120 °C et 190 °C, de 1 % à 40 % et plus particulièrement de 2 % à 30 %, en poids du bitume, d'un agent fluxant, qui peut consister, notamment, en une huile hydrocarbonée présentant un intervalle de distillation à pression atmosphérique déterminé selon la norme ASTM D 86-67, compris entre 100 °C et 600 °C et situé plus spécialement entre 150 °C et 400 °C. Cette huile hydrocarbonée, qui peut être notamment une coupe pétrolière de caractère aromatique, une coupe pétrolière de caractère naphténo-aromatique, une coupe pétrolière de caractère naphténoparaffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/élastomère fonctionnalisé la contenant, de manière à retrouver les mêmes propriétés mécaniques qu'aurait présentées, après répandage à chaud, la composition bitume/élastomère fonctionnalisé préparée sans utiliser d'agent fluxant. L'agent fluxant peut être ajouté au milieu réactionnel générant le produit de réaction constituant la composition bitume/élastomère fonctionnalisé à un moment quelconque de la constitution dudit milieu réactionnel ou encore audit produit de réaction. Si des additifs réactifs sont incorporés au produit de réaction précité, l'agent fluxant peut être ajouté audit produit de réaction avant ou après addition desdits additifs réactifs à ce dernier. La quantité d'agent fluxant est choisie dans les intervalles définis plus haut, pour être compatible avec l'usage final désiré sur le chantier.

Outre les additifs réactifs et l'agent de fluxage, on peut encore incorporer soit au milieu réactionnel générant le produit de réaction constituant la composition bitume/élastomère fonctionnalisé, à un moment quelconque de la constitution dudit milieu réactionnel, soit audit produit de réaction, des additifs conventionnellement utilisés dans les compositions à base de bitume et de polymère, tels que des promoteurs d'adhésion de la composition bitume/élastomère fonctionnalisé aux surfaces minérales ou encore des charges comme le talc, le noir de carbone, les pneus usagés réduits en poudrette.

Dans une forme de mise en oeuvre du procédé selon l'invention, utilisant un huile hydrocarbonée telle que définie plus haut, à titre d'agent fluxant, l'élastomère, l'agent de fonctionnalisation et éventuellement, s'il est utilisé, le composé peroxydé, sont incorporés au bitume ou mélange de bitumes sous la forme d'une solution mère de ces produits dans l'huile hydrocarbonée formant l'agent fluxant, pour constituer le milieu réactionnel générant le produit de réaction formant la composition bitume/élastomère fonctionnalisé.

La solution mère est préparée par mise en contact des ingrédients la composant, à savoir huile hydrocarbonée servant de solvant, élastomère, agent de fonctionnalisation et éventuellement, s'il est utilisé, composé peroxydé, sous agitation à des températures comprises entre 10 °C et 170 °C et plus particulièrement entre 40 °C et 120 °C, et inférieures à la température de décomposition du composé peroxydé si ce dernier est présent, pendant une durée

suffisante, par exemple d'environ 30 minutes à environ 90 minutes, pour obtenir une dissolution complète de l'élastomère, de l'agent de fonctionnalisation et, s'il est présent, du composé peroxydé dans l'huile hydrocarbonée.

Les concentrations respectives de l'élastomère, de l'agent de fonctionnalisation et, s'il est présent, du composé peroxydé dans la solution mère peuvent varier assez largement en fonction, notamment, de la nature de l'huile hydrocarbonée utilisée pour dissoudre l'élastomère, l'agent de fonctionnalisation et, s'il est utilisé, le composé peroxydé. Ainsi, la solution mère peut renfermer, en poids de l'huile hydrocarbonée, entre 5 % et 40 % et plus particulièrement entre 10 % et 30 % d'élastomère, entre 0,05 % et 10 % et de préférence entre 0,1 % et 8 % d'agent de fonctionnalisation, et, en poids de l'élastomè 0 % à 15 % et de préférence 0 % à 10 % de composé peroxydé.

Pour préparer les compositions bitume/élastomère fonctionnalisé selon l'invention en faisant appel à la technique de la solution mère, on mélange la solution mère renfermant l'élastomère l'agent de fonctionnalisation et, s'il est utilisé, le composé peroxydé, avec le bitume ou mélange de bitumes, en opérant à des températures comprises entre 100 °C et 230 °C, plus particulièrement entre 120 °C et 190 °C, et sous agitation, ceci étant réalisé, par exemple, en incorporant la solution mère au bitume ou mélange de bitumes maintenu sous agitation aux températures entre 100 °C et 230 °C et plus particulièrement entre 120 °C et 190 °C, puis on maintient le mélange résultant sous agitation à des températures comprises entre 100 °C et 230 °C, plus particulièrement entre 120 °C et 190 °C, par exemple aux températures utilisées pour réaliser le mélange de la solution mère avec le bitume ou mélange de bitumes, pendant une durée au moins égale à 10 minutes, et généralement allant de 10 minutes à 90 minutes, pour former un produit de réaction constituant la composition bitume/élastomère fonctionnalisé.

La quantité de solution mère incorporée au bitume ou mélange de bitumes est choisie pour fournir les quantités désirées, par rapport au bitume, d'élastomère, d'agent de fonctionnalisation et, s'il est utilisé, de composé peroxydé, lesdites quantités étant dans les fourchettes définies précédemment.

Les compositions bitume/élastomère fonctionnalisé obtenues par le procédé selon l'invention peuvent être utilisées telles quelles ou bien diluées avec des proportions variables d'un bitume ou mélange de bitumes ou d'une composition selon l'invention ayant des caractéristiques différentes pour former des liants bitume/élastomère fonctionnalisé ayant des teneurs choisies en élastomère fonctionnalisé. Ces teneurs peuvent être soit égales (compositions non diluées) aux teneurs en élastomère fonctionnalisé des compositions bitume/élastomère fonctionnalisé initiales correspondantes, soit différentes (compositions diluées) de ces dernières teneurs. La dilution des compositions bitume/élastomère fonctionnalisé selon l'invention avec un bitume ou mélange de bitumes ou avec une composition selon l'invention de caractéristiques différentes peut être réalisée soit directement à la suite de l'obtention desdites compositions, lorsqu'une utilisation quasi immédiate des liants bitume/élastomère fonctionnalisé résultants est requise, ou bien encore après une durée de stockage plus ou moins prolongée des compositions bitume/élastomère fonctionnalisé, lorsqu'une utilisation différée des liants bitume/élastomère fonctionnalisé résultants est envisagée.

Le bitume ou mélange de bitumes utilisé pour la dilution d'une composition bitume/élastomère fonctionnalisé selon l'invention peut être choisi parmi les bitumes définis précédemment comme convenant à la préparation des compositions bitume/élastomère fonctionnalisé.

La dilution d'une composition bitume/élastomère fonctionnalisé selon l'invention par un bitume ou mélange de bitumes ou par une seconde composition selon l'invention à teneur plus faible en élastomère fonctionnalisé, pour former un liant bitume/élastomère fonctionnalisé à teneur choisie en élastomère fonctionnalisé inférieure à celle de la composition bitume/élastomère fonctionnalisé à diluer, est généralement réalisée en mettant en contact, sous agitation et à des températures comprises entre 100 °C et 230 °C et plus particulièrement entre 120 °C et 190 °C, des proportions convenables de la composition bitume/élastomère fonctionnalisé à diluer et de bitume ou mélange de bitumes ou de seconde composition bitume/élastomère fonctionnalisé.

Les liants bitume/élastomère fonctionnalisé consistant en les compositions bitume/élastomère fonctionnalisé selon l'invention ou résultant de la dilution desdites compositions, par un bitume ou mélange de bitumes ou par une autre composition bitume/élastomère fonctionnalisé selon l'invention, jusqu'à la teneur désirée en élastomère fonctionnalisé dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids, sauf indication contraire.

En outre, les caractéristiques rhéologiques et mécaniques des bitumes ou des compositions bitume/élastomère fonctionnalisé auxquelles on fait référence dans lesdits exemples sont les suivantes :

- pénétrabilité, exprimée en 1/10 de mm et déterminée selon la norme NF T 66004,
- température de ramollissement bille et anneau, exprimée en °C et déterminée par l'essai bille et anneau défini par la norme NF T 66008,
- caractéristiques rhéologiques en traction déterminées selon la norme NF T 46002 et comportant les grandeurs :

- élongation à la rupture $\varepsilon_r$ en %,
- contrainte à la rupture σr en daN/cm$^2$,

- indice de PFEIFFER (en abrégé IP) calculé par la relation

$$IP = \frac{20 - 500A}{1 + 50\ A}$$

avec

$$A = \frac{\log_{10}800 - \log_{10}pen}{TBA - 25}$$

où "pen" et "TBA" désignent respectivement la pénétrabilité et la température bille et anneau, telles que définies plus haut, cet indice fournissant une indication de la susceptibilité thermique de la composition.

EXEMPLES 1 à 7 :

On préparait des compositions bitume/élastomère et bitume/élastomère fonctionnalisé témoins (exemples 1 à 5) et des compositions bitume/élastomère fonctionnalisé selon l'invention (exemples 6 et 7) pour en évaluer et comparer les caractéristiques physicomécaniques.
On opérait dans les conditions suivantes :

. Exemple 1 (témoin) : Préparation d'une composition bitume/élastomère non fonctionnalisé.

Dans un réacteur maintenu à 180 °C et sous agitation, on introduisait 965 parties d'un bitume ayant une pénétrabilité à 25 °C, déterminée selon les modalités de la norme NF T 66004, égale à 68 et 35 parties d'un copolymère séquencé de styrène et de butadiène à titre d'élastomère, ledit copolymère ayant une masse moléculaire moyenne en poids égale à 100 000 daltons et renfermant 25 % de styrène. Après 3 heures de mélange sous agitation à 180 °C, on obtenait une masse homogène constituant la composition bitume/élastomère non fonctionnalisé.

. Exemple 2 (témoin) : Préparation d'une composition bitume/élastomère fonctionnalisé (agent de fonctionnalisation = anhydride maléique).

Dans un réacteur maintenu à 180 °C et sous agitation, on introduisait 900 parties du bitume utilisé dans l'exemple 1 et 90 parties du copolymère séquencé de styrène et de butadiène employé dans ledit exemple 1. Après 5 heures de mélange sous agitation à 180 °C, on obtenait une masse homogène.
Au contenu du réacteur, on incorporait alors, à 180 °C et sous agitation, 5 parties d'anhydride maléique et l'on maintenait ensuite le milieu réactionnel ainsi formé, à ladite température et sous agitation, pendant une durée de quatre heures pour former une composition bitume/élastomère fonctionnalisé à teneur élevée en élastomère fonctionnalisé utilisable comme concentré.
La composition bitume/élastomère fonctionnalisé ainsi obtenue était ensuite diluée avec le même bitume que celui utilisé dans l'exemple 1 jusqu'à une teneur finale de 3,5 % en élastomère fonctionnalisé dans la composition diluée. L'opération de dilution était effectuée à 180 °C et sous agitation et la composition diluée formée en fin d'addition du bitume était encore maintenue sous agitation à 180 °C pendant une durée d'une heure pour parfaire son homogénéisation.

. Exemple 3 (témoin) : Préparation d'une composition bitume/élastomère fonctionnalisé renfermant un additif réactif du type polyamine.

En opérant comme décrit dans l'exemple 2, on préparait une composition bitume/élastomère fonctionnalisé à teneur élevée en élastomère fonctionnalisé utilisable comme concentré. A cette composition, maintenue sous agitation à 180 °C, on ajoutait alors, en poids du bitume, 0,2 % d'une amine grasse, à savoir N-suif amino-3 propyl-1 tétrahydropyrimidine, commercialisée sous le nom POLYRAM L 200 ® par la société CECA, et maintenait le tout, sous agitation, à 180 °C pendant 1 heure pour permettre à l'amine de réagir avec les fonctions carboxyliques de la composition.
La composition bitume/élastomère fonctionnalisé neutralisée ainsi obtenue était ensuite diluée comme indiqué dans l'exemple 2 jusqu'à une teneur finale de 3,5 % en élastomère fonctionnalisé dans la composition diluée.

Exemple 4 (témoin) : Préparation d'une composition bitume/élastomère fonctionnalisé (agent de fonctionnalisation = acide thioglycolique).

On préparait une composition bitume/élastomère fonctionnalisé à teneur élevée en élastomère fonctionnalisé en opérant comme décrit dans l'exemple 2 avec toutefois remplacement de l'anhydride maléique, utilisé comme agent de fonctionnalisation, par 10 parties d'acide thioglycolique.
La composition bitume/élastomère fonctionnalisé ainsi obtenue était ensuite diluée comme indiqué dans l'exemple 2 jusqu'à une teneur finale de 3,5 % en élastomère fonctionnalisé dans la composition diluée.

. Exemple 5 (témoin) : Préparation d'une composition bitume/élastomère fonctionnalisé neutralisée par un additif réactif du type polyamine.

En opérant comme décrit dans l'exemple 4, on préparait une composition bitume/élastomère fonctionnalisé à teneur élevée en élastomère fonctionnalisé. Cette composition était ensuite neutralisée par l'amine grasse POLYRAM L 200 en opérant comme indiqué dans l'exemple 3.
La composition bitume/élastomère fonctionnalisé neutralisée ainsi obtenue était ensuite diluée comme indiqué dans l'exemple 2 jusqu'à une teneur finale de 3,5 % en élastomère fonctionnalisé dans la composition diluée.

. Exemple 6 (selon l'invention) : Préparation d'une composition bitume/élastomère fonctionnalisé (agent de fonctionnalisation = acide dithiodipropionique).

On préparait une composition bitume/élastomère fonctionnalisé à teneur élevée en élastomère fonctionnalisé en opérant comme décrit dans l'exemple 2 avec toutefois remplacement de l'anhydride maléique, utilisé comme agent de fonctionnalisation, par 5 parties d'acide dithio-3,3' dipropionique.
La composition bitume/élastomère fonctionnalisé ainsi obtenue était ensuite diluée comme indiqué dans l'exemple 2 jusqu'à une teneur finale de 3,5 % en élastomère fonctionnalisé dans la composition diluée.

. Exemple 7 (selon l'invention) : Préparation d'une composition bitume/élastomère fonctionnalisé neutralisée par un réactif du type polyamine.

En opérant comme décrit dans l'exemple 6, on préparait une composition bitume/élastomère fonctionnalisé à teneur élevée en élastomère fonctionnalisé. Cette composition était ensuite neutralisée par l'amine grasse POLYRAM L 200 en opérant comme indiqué dans l'exempl 3.
La composition bitume/élastomère fonctionnalisé neutralisée ainsi obtenue était ensuite diluée comme indiqué dans l'exemple 2 jusqu'à une teneur finale de 3,5 % en élastomère fonctionnalisé dans la composition diluée.
Pour la composition bitume/élastomère de l'exemple 1, ainsi que pour chacune des compositions diluées obtenues comme indiqué dans les exemples 2 à 7, on a déterminé les caractéristiques suivantes :

- pénétrabilité à 25 °C (Pen.25),
- température de ramollissement bille et anneau (TBA),
- indice de PFEIFFER (IP),
- caractéristiques rhéologiques en traction, à savoir :
  - contrainte à la rupture ($\sigma_r$),
  - élongation à la rupture ($\varepsilon_r$).

Les résultats obtenus sont rassemblés dans le tableau suivant.

TABLEAU

| EXEMPLE | 1 | 2 | 3 | 4 | 5 | 6 | 7 |
|---|---|---|---|---|---|---|---|
| Bitume initial (parties en poids) | 965 | 900 | 900 | 900 | 900 | 900 | 900 |
| Elastomère (parties en poids) | 35 | 90 | 90 | 90 | 90 | 90 | 90 |

TABLEAU (suite)

| EXEMPLE | 1 | 2 | 3 | 4 | 5 | 6 | 7 |
|---|---|---|---|---|---|---|---|
| AFP* | | | | | | | |
| . Nature<br>. Parties en poids | | AM<br>5 | AM<br>5 | AT<br>10 | AT<br>10 | ADP<br>5 | ADP<br>5 |
| Amine (parties en poids) | | | 1,8 | | 1,8 | | 1,8 |
| Bitume de dilution (parties en poids) | | 1670 | 1670 | 1670 | 1670 | 1670 | 1670 |
| Pén.25 (0,1 mm) | 60 | 58 | 55 | 50 | 50 | 49 | 46 |
| TBA (°C) | 53,5 | 55 | 56 | 57 | 58 | 60 | 62 |
| IP | +0,009 | +0,30 | +0,40 | +0,41 | +0,62 | +0,98 | +1,21 |
| Traction à 20 °C | | | | | | | |
| $\sigma_r$ (da N/cm$^2$)<br>$\varepsilon_r$ (%) | 0,1<br>700 | 0,2<br>700 | 0,3<br>700 | 0,4<br>700 | 0,6<br>>700 | 1,0<br>>700 | 1,3<br>>700 |
| Traction à 5 °C | | | | | | | |
| $\sigma_r$ (da N/cm$^2$)<br>$\varepsilon_r$ (%) | 4,0<br>130 | 2,0<br>200 | 1,0<br>340 | 3,5<br>400 | 4,0<br>>700 | 7,0<br>>700 | 9,0<br>>700 |

AFP* : Agent de fonctionnalisation polycarboxylique.
AM : Anhydride maléique.
AT : Acide thioglycolique.
ADP : Acide dithio-3,3'dipropionique.

Au vu des résultats rassemblés dans le tableau, on peut faire les remarques suivantes :

- la fonctionnalisation in situ utilisant un agent de fonctionnalisation carboxylique selon l'état de la technique (exemples 2 à 5) ou un agent de fonctionnalisation polycarboxylique selon l'invention (exemples 6 et 7) permet d'obtenir des concentrés bitume/élastomère fonctionnalisé à teneur élevée (9 % dans les exemples 2 à 7) en élastomère fonctionnalisé sans rencontrer de phénomènes de gélification, lesdits concentrés ne démixant pas, même après stockage prolongé à température élevée;
- les caractéristiques physicomécaniques des compositions diluées obtenues par dilution des concentrés bitume/élastomère fonctionnalisé non neutralisés (exemples 2, 4 et 6) sont déjà améliorées par rapport aux caractéristiques des compositions bitume/élastomère non fonctionnalisé (exemple 1), ce qui met en évidence l'effet des groupements fonctionnels carboxyliques induisant une réticulation par formation de liaisons hydrogène ;
- l'ajout d'additifs réactifs, comme par exemple une polyamine (exemples 3, 5 et 7) aux compositions résultant de la mise en contact du bitume avec l'élastomère et l'agent de fonctionnalisation, renforce la consistance (amélioration de la température bille et anneau), la susceptibilité thermique (augmentation de l'indice de PFEIFFER) et l'élastoméricité (valeurs de εr et de σr plus élevées) des compositions par un effet de réticulation ionomère ;
- les compositions bitume/élastomère fonctionnalisé résultant de la dilution des concentrés non neutralisés (exemple 6) ou neutralisés (exemple 7) obtenus en faisant appel aux agents de fonctionnalisation polycarboxylique selon l'invention présentent des propriétés physicomécaniques améliorées, notamment consistance (augmentation de la température bille et anneau), susceptibilité thermique (indice de PFEIFFER plus élevé) et élastoméricité (valeurs plus élevées de σr), par rapport aux compositions bitume/élastomère fonctionnalisé correspondantes résultant de la dilution de concentrés à même teneur en élastomère fonctionnalisé non neutralisés (exemples 2 et 4) ou neutralisés (exemples 3 et 5) obtenus en effectuant la fonctionnalisation au moyen d'agents de fonctionnalisation selon l'état de la technique (exemples 2 à 5).

## Revendications

**1.** Procédé de préparation de compositions bitume/élastomère fonctionnalisé à large intervalle de plasticité, du type dans lequel on met en contact, en opérant à des températures comprises entre 100 °C et 230 °C et sous agitation, pendant une durée d'au moins dix minutes, un bitume ou mélange de bitumes avec, comptés en poids du bitume, entre 0,5 % et 25 % d'un élastomère et entre 0,01 % et 6 % d'un agent de fonctionnalisation ledit procédé se

caractérisant en ce que l'agent de fonctionnalisation consiste en au moins un composé répondant à l'une ou l'autre des formules

(a) 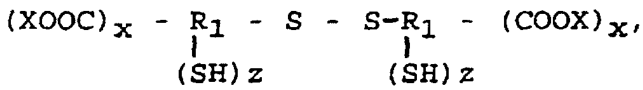

(b) 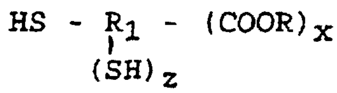 et (c) 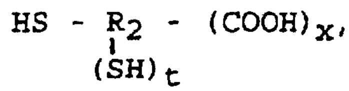

dans lesquelles X représente un atome d'hydrogène ou un radical R, chaque $R_1$ désigne un radical hydrocarboné (x+z+1)- valent en $C_1$ à $C_{12}$, de préférence en $C_1$ à $C_8$, R représente un radical hydrocarboné monovalent en $C_1$ à $C_{12}$, de préférence en $C_1$ à $C_8$, $R_2$ désigne un radical hydrocarboné (x+t+1) - valent en $C_2$ à $C_{12}$, de préférence en $C_2$ à $C_8$, t est zéro ou 1, chaque x désigne un nombre entier ayant une valeur allant de 1 à 3, de préférence égale à 1 ou 2, et z est zéro ou 1, avec $x+z \leq 3$.

2. Procédé selon la revendication 1, **caractérisé en ce que** l'agent de fonctionnalisation consiste en au moins un disulfure de formule $(XOOC)_x$-$R_3$-S-S-$R_3$-$(COOX)_x$, où X désigne H ou un radical R, x est un nombre entier allant de 1 à 3, de préférence égal à 1 ou 2, et $R_3$ représente un radical hydrocarboné (x+1)- valent en $C_1$ à $C_{12}$, de préférence en $C_1$ à $C_8$, ledit disulfure ayant plus spécialement la formule $(HOOC)_x$-$R_3$-S-S-$R_3$-$(COOH)_x$.

3. Procédé selon la revendication 1 ou 2, **caractérisé en ce que**, dans les formules de l'agent de fonctionnalisation, les radicaux R1 et R3 sont des radicaux aliphatiques saturés, linéaires ou ramifiés, en $C_1$ à $C_{12}$, de préférence en $C_1$ à $C_8$ et tout spécialement en $C_1$ à $C_6$, des radicaux aliphatiques insaturés, linéaires ou ramifiés, en $C_2$ à $C_{12}$, de préférence en $C_2$ à $C_8$ et tout spécialement en $C_2$ à $C_6$, des radicaux cycloaliphatiques en $C_4$ à $C_{12}$, de préférence en $C_6$ à $C_8$ ou des radicaux aromatiques en $C_6$ à $C_{12}$, de préférence en $C_6$ à $C_8$, tandis que les radicaux $R_2$ sont des radicaux aliphatiques saturés, linéaires ou ramifiés, en $C_2$ à $C_{12}$, de préférence en $C_2$ à $C_8$ et tout spécialement en $C_2$ à $C_6$, des radicaux aliphatiques insaturés, linéaires ou ramifiés, en $C_2$ à $C_{12}$, de préférence en $C_2$ à $C_8$ et tout spécialement en $C_2$ à $C_6$, des radicaux cycloaliphatiques en $C_4$ à $C_{12}$, de préférence en $C_6$ à $C_8$ ou encore des radicaux aromatiques en $C_6$ à $C_{12}$, de préférence en $C_6$ à $C_8$.

4. Procédé selon l'une des revendications 1 à 3, **caractérisé en ce que**, dans les formules de l'agent de fonctionnalisation, les radicaux monovalents R sont des radicaux aliphatiques saturés, linéaires ou ramifiés, en $C_1$ à $C_{12}$, de préférence en $C_1$ à $C_8$, des radicaux aliphatiques insaturés, linéaires ou ramifiés, en $C_2$ à $C_{12}$, de préférence en $C_2$ à $C_8$, des radicaux cycloaliphatiques en $C_4$ à $C_{12}$, de préférence en $C_6$ à $C_8$, ou encore des radicaux aromatiques en $C_6$ à $C_{12}$, de préférence en $C_6$ à $C_8$, lesdits radicaux R étant tout particulièrement des radicaux alkyles linéaires ou ramifiés en $C_1$ à $C_{12}$ et plus spécialement en $C_1$ à $C_8$.

5. Procédé selon l'une des revendications 1 à 4, **caractérisé en ce que** l'agent de fonctionnalisation est utilisé en quantité comprise entre 0,05 % et 3 % en poids du bitume.

6. Procédé selon l'une des revendications 1 à 5, **caractérisé en ce que** la quantité d'élastomère est comprise entre 1 % et 15 % en poids du bitume.

7. Procédé selon l'une des revendications 1 à 6, **caractérisé en ce que** le bitume ou mélange de bitumes est choisi parmi les bitumes ayant une viscosité cinématique à 100 °C comprise entre $0{,}5 \times 10^{-4}$ $m^2/s$ et $3 \times 10^{-2}$ $m^2/s$ et de préférence entre $1 \times 10^{-4}$ $m^2/s$ et $2 \times 10^{-2}$ $m^2/s$.

8. Procédé selon la revendication 7, **caractérisé en ce que** le bitume ou mélange de bitumes présente une pénétrabilité à 25 °C, définie suivant la norme NF T 66004, comprise entre 5 et 800 et de préférence entre 10 et 400.

9. Procédé selon l'une des revendications 1 à 8, **caractérisé en ce que** l'élastomère est choisi parmi les copolymères statistiques ou séquencés de styrène et d'un diène conjugué, ledit diène étant en particulier tel que butadiène, isoprène, chloroprène, butadiène carboxylé, isoprène carboxylé.

10. Procédé selon la revendication 9, **caractérisé en ce que** le copolymère de styrène et de diène conjugué renferme,

en poids, 5 % à 50 % de styrène.

11. Procédé selon la revendication 9 ou 10, **caractérisé en ce que** la masse moléculaire moyenne en poids du copolymère de styrène et de diène conjugué est comprise entre 10 000 et 600 000 daltons et de préférence entre 30 000 et 400 000 daltons.

12. Procédé selon l'une des revendications 1 à 11, **caractérisé en ce que** l'on ajoute un composé peroxydé, notamment un peroxyde de dihydrocarbyle, générant des radicaux libres aux températures comprises entre 100 °C et 230 °C, au milieu réactionnel formé du bitume ou mélange de bitumes, de l'élastomère et de l'agent de fonctionnalisation, ledit composé peroxydé étant utilisé en quantité allant, en particulier, jusqu'à 15 % en poids de l'élastomère.

13. Procédé selon l'une des revendications 1 à 12, **caractérisé en ce que** la mise en contact du bitume ou mélange de bitumes avec l'élastomère, l'agent de fonctionnalisation et, s'il est utilisé, le composé peroxydé est réalisée en incorporant tout d'abord l'élastomère au bitume ou mélange de bitumes, en opérant à des températures comprises entre 100 °C et 230 °C, plus particulièrement entre 120 °C et 190 °C, et sous agitation, pendant une durée de quelques dizaines de minutes à quelques heures, en particulier de 30 minutes à 8 heures, pour former un mélange homogène de bitume et d'élastomère, puis en introduisant dans ledit mélange l'agent de fonctionnalisation et ensuite, s'il est utilisé, le composé peroxydé en quantités appropriées et en maintenant le tout sous agitation à des températures comprises entre 100 °C et 230 °C, plus particulièrement entre 120 °C et 190 °C, et identiques ou non aux températures d'incorporation de l'élastomère au bitume ou mélange de bitumes, pendant une durée au moins égale à 10 minutes et généralement allant de 10 minutes à 5 heures, plus particulièrement de 30 minutes à 180 minutes, pour former un produit de réaction constituant la composition bitume/élastomère fonctionnalisé.

14. Procédé selon la revendication 13, **caractérisé en ce que** ledit produit de réaction constituant la composition bitume/élastomère fonctionnalisé est additionné, en opérant sous agitation à des températures comprises entre 100 °C et 230 °C, plus particulièrement entre 120 °C et 190 °C, d'un ou plusieurs additifs susceptibles de réagir avec les groupements fonctionnels carboxyliques ou esters carboxyliques portés par l'élastomère et éventuellement par le bitume, lesdits additifs réactifs étant en particulier des amines, notamment polyamines, primaires ou secondaires, des alcools, notamment polyols, des aminoalcools, des époxydes ou encore des composés métalliques, notamment composés de métaux des groupes I, II, III ou VIII du Tableau Périodique des Eléments.

15. Procédé selon la revendication 14, **caractérisé en ce que** la quantité d'additif réactif ou d'additifs réactifs, incorporée audit produit de réaction représente 0,01 % à 10 % et plus particulièrement 0,05 % à 5 % du poids de bitume contenu dans le produit de réaction.

16. Procédé selon l'une des revendications 1 à 15, **caractérisé en ce que** le milieu réactionnel formé en mettant en contact le bitume ou mélange de bitumes, l'élastomère, l'agent de fonctionnalisation et, s'il est utilisé, le composé peroxydé ou le produit de réaction résultant de ladite mise en contact est additionné, en opérant sous agitation à des températures comprises entre 100 °C et 230 °C et plus particulièrement entre 120 °C et 190 °C, de 1 % à 40 % et plus spécialement de 2 % à 30 %, en poids du bitume, d'un agent fluxant, ledit agent fluxant étant en particulier une huile hydrocarbonée présentant un intervalle de distillation à pression atmosphérique, déterminé selon la norme ASTM D 86-67, compris entre 100 °C et 600 °C et situé plus spécialement entre 150 °C et 400 °C.

17. Procédé selon la revendication 16, **caractérisé en ce que** l'élastomère, l'agent de fonctionnalisation et éventuellement, s'il est utilisé, le composé peroxydé sont incorporés au bitume ou mélange de bitumes sous la forme d'une solution mère de ces produits dans l'huile hydrocarbonée en particulier choisie pour constituer l'agent fluxant.

18. Procédé selon la revendication 17, **caractérisé en ce que** l'on mélange la solution mère, renfermant l'élastomère, l'agent de fonctionnalisation et, s'il est utilisé, le composé peroxydé, avec le bitume ou mélange de bitumes, en opérant à des températures comprises entre 100 °C et 230 °C, plus particulièrement entre 120 °C et 190 °C, et sous agitation, puis on maintient le mélange résultant sous agitation à des températures comprises entre 100 °C et 230 °C, plus particulièrement entre 120 °C et 190 °C, pendant une durée au moins égale à 10 minutes et généralement allant de 10 minutes à 90 minutes, pour former un produit de réaction constituant la composition bitume/élastomère fonctionnalisé.

19. Application des compositions bitume/élastomère fonctionnalisé obtenues par le procédé selon l'une des revendications 1 à 18, à la production de liants bitume/élastomère fonctionnalisé, lesdits liants consistant en lesdites

compositions utilisées telles quelles ou bien étant formés par dilution des dites compositions bitume/élastomère fonctionnalisé par un bitume ou mélange de bitumes ou bien par une autre composition bitume/élastomère fonctionnalisé selon l'une des revendications 1 à 18 ayant des caractéristiques différentes, lesquels liants bitume/élastomère fonctionnalisé sont notamment utilisables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

**20.** Solution mère, utilisable notamment pour la préparation de compositions bitume/élastomère fonctionnalisé, comprenant (i) une huile hydrocarbonée, qui présente un intervalle de distillation à pression atmosphérique, déterminé selon la norme ASTM D 86-67, compris entre 100 °C et 600 °C et plus particulièrement entre 150 °C et 400 °C et (ii) un élastomère, **caractérisée en ce que** ladite solution mère renferme également, en solution, un agent de fonctionnalisation et éventuellement un composé peroxydé, lequel agent de fonctionnalisation consiste en au moins un composé répondant à l'une ou l'autre des formules

(a) 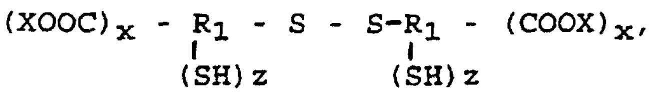

(b) 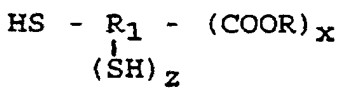 et (c) 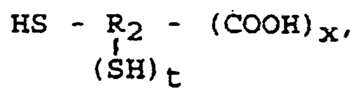

dans lesquelles X représente un atome d'hydrogène ou un radical R, chaque $R_1$ désigne un radical hydrocarboné (x+z+1)- valent en $C_1$ à $C_{12}$, de préférence en $C_1$ à $C_8$, R représente un radical hydrocarboné monovalent en $C_1$ à $C_{12}$, de préférence en $C_1$ à $C_8$, $R_2$ désigne un radical hydrocarboné (x+t+1)- valent en $C_2$ à $C_{12}$, de préférence en $C_2$ à $C_8$, t est zéro ou 1, chaque x désigne un nombre entier ayant une valeur allant de 1 à 3, de préférence égale à 1 ou 2, et z est zéro ou 1, avec $x+z \leq 3$, ledit agent de fonctionnalisation étant plus particulièrement constitué d'au moins un disulfure de formule $(XOOC)_x$-$R_3$-S-S-$R_3$-$(COOX)_x$, où X désigne H ou un radical R, x est un nombre entier allant de 1 à 3, de préférence égal à 1 ou 2, et $R_3$ représente un radical hydrocarboné (x+1)-valent en $C_1$ à $C_{12}$, de préférence en $C_1$ à $C_8$, ledit disulfure ayant plus spécialement la formule $(HOOC)_x$-$R_3$-S-S-$R_3$-$(COOH)_x$.

**21.** Solution mère selon la revendication 20, **caractérisée en ce que**, dans les formules de l'agent de fonctionnalisation, les radicaux $R_1$ et $R_3$ sont des radicaux aliphatiques saturés, linéaires ou ramifiés, en $C_1$ à $C_{12}$, de préférence en $C_1$ à $C_8$, et tout spécialement en $C_1$ à $C_6$, des radicaux aliphatiques insaturés, linéaires ou ramifiés, en $C_2$ à $C_{12}$, de préférence en $C_2$ à $C_8$ et tout spécialement en $C_2$ à $C_6$, des radicaux cycloaliphatiques en $C_4$ à $C_{12}$, de préférence en $C_6$ à $C_8$ ou des radicaux aromatiques en $C_6$ à $C_{12}$, de préférence en $C_6$ à $C_8$, tandis que les radicaux $R_2$ sont des radicaux aliphatiques saturés, linéaires ou ramifiés, en $C_2$ à $C_{12}$, de préférence en $C_2$ à $C_8$ et tout spécialement en $C_2$ à $C_6$, des radicaux aliphatiques insaturés, linéaires ou ramifiés, en $C_2$ à $C_{12}$, de préférence en $C_2$ à $C_8$ et tout spécialement en $C_2$ à $C_6$, des radicaux cycloaliphatiques en $C_4$ à $C_{12}$, de préférence en $C_6$ à $C_8$ ou encore des radicaux aromatiques en $C_6$ à $C_{12}$, de préférence en $C_6$ à $C_8$.

**22.** Solution mère selon la revendication 20 ou 21, **caractérisée en ce que**, dans les formules de l'agent de fonctionnalisation, les radicaux monovalents R sont des radicaux aliphatiques saturés, linéaires ou ramifiés, en $C_1$ à $C_{12}$, de préférence en $C_1$ à $C_8$, des radicaux aliphatiques insaturés, linéaires ou ramifiés, en $C_2$ à $C_{12}$, de préférence en $C_2$ à $C_8$, des radicaux cycloaliphatiques en $C_4$ à $C_{12}$, de préférence en $C_6$ à $C_8$, ou encore des radicaux aromatiques en $C_6$ à $C_{12}$, de préférence en $C_6$ à $C_8$, lesdits radicaux R étant tout particulièrement des radicaux alkyles linéaires ou ramifiés en $C_1$ à $C_{12}$ et plus spécialement en $C_1$ à $C_8$.

**23.** Solution mère selon l'une des revendications 20 à 22, **caractérisée en ce que** l'élastomère est choisi parmi les copolymères statistiques ou séquencés de styrène et d'un diène conjugué, notamment isoprène, chloroprène, butadiène, butadiène carboxylé et isoprène carboxylé, lesdits copolymères ayant en particulier une teneur en styrène allant de 5 % à 50 % en poids.

**24.** Solution mère selon la revendication 24, **caractérisée en ce que** la masse moléculaire moyenne en poids des copolymères de styrène et de diène conjugué est comprise entre 10 000 et 600 000 daltons et de préférence entre 30 000 et 400 000 daltons.

**25.** Solution mère selon l'une des revendications 20 à 24, **caractérisée en ce que** l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

**26.** Solution mère selon l'une des revendications 20 à 25, **caractérisée en ce qu'**elle renferme, en poids de l'huile hydrocarbonée, entre 5 % et 40 % d'élastomère, entre 0,05 % et 10 % d'agent de fonctionnalisation et, en poids de l'élastomère, 0 % à 15 % du composé peroxydé.

**27.** Solution mère selon la revendication 26, **caractérisée en ce qu'**elle renferme, en poids de l'huile hydrocarbonée, entre 10 % et 30 % d'élastomère, entre 0,1 % et 8 % d'agent de fonctionnalisation et, en poids de l'élastomère, 0 % à 10 % du composé peroxydé.

## Patentansprüche

**1.** Verfahren zur Herstellung von Zusammensetzungen aus Bitumen und Elastomer, welches eine Funktionalität über einen weiten Bereich der Plastizität besitzt, von der Art, bei welcher im Betrieb bei Temperaturen zwischen 100 °C und 230 °C und unter Rühren für die Dauer von mindestens zehn Minuten das Bitumen bzw. ein Bitumengemisch mit einem Elastomer in einer Menge zwischen 0,5 und 25 %, bezogen auf das Gewicht des Bitumens, und mit einem Funktionalisierungsmittel in einer Menge von 0,01 bis 6 %, bezogen auf das Gewicht des Bitumens, in Kontakt gebracht wird, **dadurch gekennzeichnet, dass** das Funktionalisierungsmittel aus mindestens einer Zusammensetzung mit der einen oder anderen der folgenden Formeln

a) 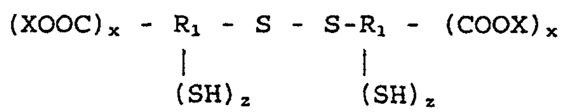

b) 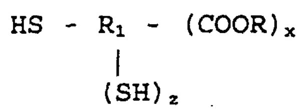

und

c) 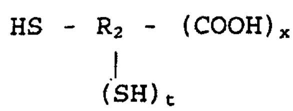

besteht, wobei X ein Wasserstoffatom oder ein Radikal bezeichnet, jede Gruppe $R_1$ einem kohlenwasserstoffhaltigen Radikal (x + z +1) mit der Wertigkeit $C_1$ bis $C_{12}$, vorzugsweise $C_1$ bis $C_8$, entspricht, R ein einwertiges kohlenwasserstoffhaltiges Radikal mit $C_1$ bis $C_{12}$, vorzugsweise $C_1$ bis $C_8$, bedeutet, $R_2$ ein kohlenwasserstoffhaltiges Radikal (x + t +1) mit einer Wertigkeit von $C_2$ bis $C_{12}$, vorzugsweise von $C_2$ bis $C_8$, angibt, t Null oder 1 ist, jedes x eine ganze Zahl bezeichnet, deren Wert von 1 bis 3 reicht und vorzugsweise gleich 1 oder 2 ist, und z Null oder 1 ist, wobei gilt: $x + z \leq 3$.

**2.** Verfahren nach Anspruch 1, **dadurch gekennzeichnet, dass** das Funktionalisierungsmittel aus mindestens einem Disulfid mit der allgemeinen Formel $(XOOC)_x$-$R_3$-S-S-$R_3$-$(COOX)_x$ besteht, wobei X Wasserstoff oder ein Radikal R bezeichnet, x eine ganze Zahl zwischen 1 und 3, vorzugsweise gleich 1 oder 2, ist, und $R_3$ ein kohlenwasserstoffhaltiges Radikal (x + 1) mit einer Wertigkeit von $C_1$ bis $C_{12}$, vorzugsweise von $C_1$ bis $C_8$, ist, wobei das Disulfid im besonderen der allgemeinen Formel $(HOOC)_x$-$R_3$-S-S-$R_3$-$(COOH)_x$ entspricht.

**3.** Verfahren nach Anspruch 1 oder 2, **dadurch gekennzeichnet, dass** in den allgemeinen Formeln des Funktiona-

lisierungsmittels die Radikale $R_1$ und $R_3$ gesättigte geradkettige oder verzweigte aliphatische Radikale mit $C_1$ bis $C_{12}$, vorzugsweise $C_1$ bis $C_8$ und insbesondere $C_1$ bis $C_6$, ungesättigte geradkettige oder verzweigte aliphatische Radikale mit $C_2$ bis $C_{12}$, vorzugsweise $C_2$ bis $C_8$ und ganz besonders $C_2$ bis $C_6$, cyclo-aliphatische Radikale mit $C_4$ bis $C_{12}$, vorzugsweise $C_6$ bis $C_8$ oder aromatische Radikale mit $C_6$ bis $C_{12}$, vorzugsweise $C_6$ bis $C_8$, sind, wohingegen die Radikale $R_2$ gesättigte geradkettige oder verzweigte aliphatische Radikale mit $C_2$ bis $C_{12}$, vorzugsweise $C_2$ bis $C_{12}$ und insbesondere $C_2$ bis $C_6$, ungesättigte geradkettige oder verzweigte aliphatische Radikale mit $C_2$ bis $C_{12}$, vorzugsweise $C_2$ bis $C_8$ und ganz besonders $C_2$ bis $C_6$, cyclo-aliphatische Radikale mit $C_4$ bis $C_{12}$, vorzugsweise $C_6$ bis $C_8$, oder auch aromatische Radikale mit $C_6$ bis $C_{12}$, vorzugsweise $C_6$ bis $C_8$, sind.

**4.** Verfahren nach einem der Ansprüche 1 bis 3, **dadurch gekennzeichnet, dass** in den allgemeinen Formeln für das Funktionalisierungsmittel die einwertigen Radikale R gesättigte geradkettige oder verzweigte aliphatische Radikale mit $C_1$ bis $C_{12}$, vorzugsweise $C_1$ bis $C_8$, ungesättigte geradkettige oder verzweigte aliphatische Radikale mit $C_2$ bis $C_{12}$, vorzugsweise $C_2$ bis $C_8$, cyclo-aliphatische Radikale mit $C_4$ bis $C_{12}$, vorzugsweise $C_6$ bis $C_8$, oder auch aromatische Radikale mit $C_6$ bis $C_{12}$, vorzugsweise $C_6$ bis $C_8$ sind, wobei die Radikale R ganz besonders geradkettige oder verzweigte Alkylgruppen mit $C_1$ bis $C_{12}$ und ganz besonders $C_1$ bis $C_8$ sind.

**5.** Verfahren nach einem der Ansprüche 1 bis 4, **dadurch gekennzeichnet, dass** das Funktionalisierungsmittel in einer Menge zwischen 0,05 Gew.-% und 3 Gew.-%, bezogen auf das Gewicht des Bitumens, eingesetzt wird.

**6.** Verfahren nach einem der Ansprüche 1 bis 5, **dadurch gekennzeichnet, dass** die Menge des Elastomeren zwischen 1 Gew.-% und 15 Gew.-%, bezogen auf das Gewicht des Bitumens, liegt.

**7.** Verfahren nach einem der Ansprüche 1 bis 6, **dadurch gekennzeichnet, dass** das Bitumen bzw. das Bitumengemisch aus der Gruppe der Bitumen gewählt wird, deren kinematische Viskosität bei 100 °C zwischen 0,5 x $10^{-4}$ $m^2/s$ und 3 x $10^{-2}$ $m^2/s$ und vorzugsweise zwischen 1 x $10^{-4}$ $m^2/s$ und 2 x $10^{-2}$ $m^2/s$ liegt.

**8.** Verfahren nach Anspruch 7, **dadurch gekennzeichnet, dass** das Bitumen bzw. das Bitumengemisch eine Durchdringbarkeit bei 25 °C, definiert nach der Norm NF T 66004, aufweist, die zwischen 5 und 800 und vorzugsweise zwischen 10 und 400 liegt.

**9.** Verfahren nach einem der Ansprüche 1 bis 8, **dadurch gekennzeichnet, dass** das Elastomer aus der Gruppe der statistischen oder sequenzierten Kopolymere aus Styrol und einem konjugierten Dien gewählt wird, wobei das Dien insbesondere ein Stoff wie Butadien, Isopren, Chloropren, carboxylhaltiges Butadien oder carboxylhaltiges Isopren ist.

**10.** Verfahren nach Anspruch 9, **dadurch gekennzeichnet, dass** das Kopolymer aus Styrol und konjugiertem Dien 5 Gew.-% bis 50 Gew.-% Styrol umfasst.

**11.** Verfahren nach Anspruch 9 oder 10, **dadurch gekennzeichnet, dass** die mittlere gewichtsbezogene molekulare Masse des Kopolymers aus Styrol und konjugiertem Dien zwischen 10.000 und 600.000 Dalton und vorzugsweise zwischen 30.000 und 400.000 Dalton liegt.

**12.** Verfahren nach einem der Ansprüche 1 bis 11, **dadurch gekennzeichnet, dass** eine Superoxid enthaltende Verbindung, insbesondere ein Dihydrocarbyl-Superoxid, zugesetzt wird, welche bei Temperaturen von 100 °C bis 230 °C in einem aus Bitumen oder Bitumengemisch, Elastomer und dem Funktionalisierungsmittel gebildeten Reaktionsmedium freie Radikale erzeugt, wobei die Superoxid enthaltende Verbindung in einer Menge eingesetzt wird, die insbesondere bis zu 15 Gew.-%, bezogen auf das Gewicht des Elastomers, beträgt.

**13.** Verfahren nach einem der Ansprüche 1 bis 12, **dadurch gekennzeichnet, dass** die Kontaktierung des Bitumens bzw. des Bitumengemisches mit dem Elastomer, dem Funktionalisierungsmittel und der Superoxid-Verbindung, sofern diese Verwendung findet, dadurch durchgeführt wird, dass zunächst das Elastomer in das Bitumen bzw. das Bitumengemisch eingebracht wird, wobei bei Temperaturen zwischen 100 °C und 230 °C, insbesondere zwischen 120 °C und 190 °C, unter Rühren während einer Dauer von mehreren zehn Minuten bis zu einigen Stunden, insbesondere von 30 Minuten bis zu 8 Stunden, gearbeitet wird, um ein homogenes Gemisch aus Bitumen und Elastomer herzustellen, woraufhin in das Gemisch das Funktionalisierungsmittel und anschließend die Superoxid enthaltende Verbindung, sofern diese Verwendung findet, jeweils in entsprechender Menge eingeleitet wird bzw. werden, und wobei das Ganze unter Rühren auf einer Temperatur zwischen 100 °C und 230 °C, insbesondere zwischen 120 °C und 190 °C gehalten wird, wobei diese Temperatur gegebenenfalls mit der Temperatur identisch

ist, bei welcher das Elastomer in das Bitumen bzw. das Bitumengemisch eingearbeitet wird, und zwar über eine Zeit, die mindestens gleich 10 Minuten ist und im allgemeinen zwischen 10 Minuten und 5 Stunden, insbesondere zwischen 30 Minuten und 180 Minuten, liegt, um so ein Reaktionsprodukt herzustellen, welches die Zusammensetzung aus Bitumen und funktionalisiertem Elastomer darstellt.

**14.** Verfahren nach Anspruch 13, **dadurch gekennzeichnet, dass** dem Reaktionsprodukt, welches die Zusammensetzung aus Bitumen und funktionalisiertem Elastomer darstellt, ein oder mehrere Zuschlagstoffe zugesetzt werden, welche mit den carboxylhaltigen Funktionsgruppen oder carboxylhaltigen Estern reagieren können, welche in dem Elastomer und gegebenenfalls in dem Bitumen enthalten sind, wobei unter Rühren bei einer Temperatur zwischen 100 °C und 230 °C, insbesondere zwischen 120 °C und 190 °C gearbeitet wird und wobei die Reaktionszusätze insbesondere Amine, vornehmlich primäre oder sekundäre Polyamine, Alkohole, vornehmlich Polyole, Aminoalkohole, Epoxide oder auch Metallverbindungen sind, vornehmlich Verbindungen mit Metallen aus den Gruppen I, II, III oder VIII des Periodensystems.

**15.** Verfahren nach Anspruch 14, **dadurch gekennzeichnet, dass** die Menge an Reaktionszuschlagstoff bzw. Reaktionszuschlagstoffen, die in das Reaktionsprodukt eingearbeitet wird, 0,01 Gew.-% bis 10 Gew.-% und insbesondere 0,05 Gew.-% bis 5 Gew.-% beträgt, bezogen auf das Gewicht des in dem Reaktionsprodukt enthaltenen Bitumens.

**16.** Verfahren nach einem der Ansprüche 1 bis 15, **dadurch gekennzeichnet, dass** dem Reaktionsmedium, das dadurch gebildet wird, dass das Bitumen bzw. das Gemisch aus Bitumen, das Elastomer, das Funktionalisierungsmittel und eine Superoxid enthaltende Verbindung, sofern diese Verwendung findet, mit einander in Kontakt gebracht werden, oder dem Reaktionsprodukt, das sich aus der Kontaktierung ergibt, ein Verdünnungsmittel in einer Menge von 1 Gew.-% bis 40 Gew.-%, insbesondere von 2 Gew.-% bis 30 Gew.-%, bezogen auf das Gewicht des Bitumens, zugesetzt wird, wobei unter Rühren bei Temperaturen zwischen 100 °C und 230 °C und insbesondere zwischen 120 °DC und 190 °C, gearbeitet wird und wobei das Verdünnungsmittel insbesondere ein kohlenwasserstoffhaltiges Öl mit einem Destillationsbereich bei normalem Luftdruck ist, der entsprechend der Norm ASTM D 86-67 bestimmt wird und zwischen 100 °C und 600 °C und insbesondere zwischen 150 °C und 400 °C liegt.

**17.** Verfahren nach Anspruch 16, **dadurch gekennzeichnet, dass** das Funktionalisierungsmittel und gegebenenfalls die Superoxid enthaltende Verbindung, sofern diese Verwendung findet, in das Bitumen bzw. das Bitumengemisch in Form einer Mutterlösung dieser Produkte in kohlenwasserstoffhaltigem Öl eingearbeitet werden, das insbesondere so gewählt wird, dass es das Verdünnungsmittel bildet.

**18.** Verfahren nach Anspruch 17, **dadurch gekennzeichnet, dass** das Gemisch aus der Mutterlösung, welche das Elastomer, das Funktionalisierungsmittel und gegebenenfalls die Superoxid enthaltende Verbindung, sofern diese Verwendung findet, mit dem Bitumen bzw. dem Bitumengemisch vermischt wird, wobei bei Temperaturen zwischen 100 °C und 230 °C, insbesondere zwischen 120 °C und 190 °C, unter Rühren gearbeitet wird, und dass man anschließend das sich dabei ergebende Gemisch unter Rühren auf einer Temperatur zwischen 100 °C und 230 °C, insbesondere zwischen 120 °C und 190 °C, für eine Dauer hält, die mindestens gleich 10 Minuten ist und im allgemeinen von 10 Minuten bis 90 Minuten reicht, um so ein Reaktionsprodukt herzustellen, welches die Zusammensetzung aus Bitumen und funktionalisiertem Elastomer darstellt.

**19.** Verwendung der Zusammensetzungen aus Bitumen und funktionalisiertem Elastomer, die durch das Verfahren nach einem der Ansprüche 1 bis 18 erhalten werden, zur Herstellung von Bindemitteln aus Bitumen und funktionalisiertem Elastomer, wobei die Bindemittel aus den verwendeten Zusammensetzungen als solche bestehen oder auch durch Verdünnen der Zusammensetzungen aus Bitumen und funktionalisiertem Elastomer mit einem Bitumen oder einem Bitumengemisch oder auch mit einer anderen Zusammensetzung aus Bitumen und funktionalisiertem Elastomer gemäß einem der Ansprüche 1 bis 18 bestehen, welche unterschiedliche Eigenschaften aufweisen, wobei diese Bindemittel aus Bitumen und funktionalisiertem Elastomer insbesondere direkt oder nach Überführung in eine wässrige Emulsion zur Herstellung von Straßenbelägen von der Art verwendbar sind, die als Beschichtung auf der Oberfläche aufgebracht werden, sowie zur Herstellung von heiß oder kalt aufgebrachtem Mischgut für Straßendecken oder auch zur Herstellung von Beschichtungen zur Abdichtung.

**20.** Mutterlösung, die insbesondere zur Herstellung von Zusammensetzungen aus Bitumen und funktionalisiertem Elastomer verwendbar ist, welche folgendes umfasst: (I) ein kohlenwasserstoffhaltiges Öl, welches einen Destillationsbereich bei normalem Luftdruck besitzt, der nach der Norm ASTM D 86-67 bestimmt wird und zwischen 100 °C und 600 °C und insbesondere zwischen 150 °C und 400 °C liegt, und (II) ein Elastomer, **dadurch gekenn-**

**zeichnet, dass** die Mutterlösung außerdem in Lösung ein Funktionalisierungsmittel und gegebenenfalls eine Superoxid enthaltende Verbindung umfasst, wobei das Funktionalisierungsmittel aus mindestens einer Verbindung steht, welche der einen oder anderen der folgenden Formeln entspricht:

a) 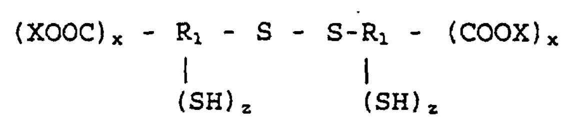

b) 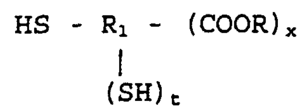

und

c) 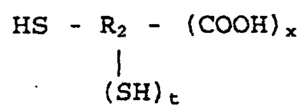

wobei X ein Wasserstoffatom oder ein Radikal bezeichnet, jede Gruppe $R_1$ einem kohlenwasserstoffhaltigen Radikal (x + z +1) mit der Wertigkeit $C_1$ bis $C_{12}$, vorzugsweise $C_1$ bis $C_8$, entspricht, R ein einwertiges kohlenwasserstoffhaltiges Radikal mit $C_1$ bis $C_{12}$, vorzugsweise $C_1$ bis $C_8$, bedeutet, $R_2$ ein kohlenwasserstoffhaltiges Radikal (x + t +1) mit einer Wertigkeit von $C_2$ bis $C_{12}$, vorzugsweise von $C_2$ bis $C_8$, angibt, t Null oder 1 ist, jedes x eine ganze Zahl bezeichnet, deren Wert von 1 bis 3 reicht und vorzugsweise gleich 1 oder 2 ist, und z Null oder 1 ist, wobei gilt: $x + z \leq 3$, wobei das Funktionalisierungsmittel insbesondere zumindest aus einem Disulfid der allgemeinen Formel $(XOOC)_x$-$R_3$-S-S-$R_3$-$(COOX)_x$ besteht, wobei X Wasserstoff oder ein Radikal R bezeichnet, x eine ganze Zahl zwischen 1 und 3, vorzugsweise gleich 1 oder 2, ist, und $R_3$ ein kohlenwasserstoffhaltiges Radikal (x + 1) mit einer Wertigkeit von $C_1$ bis $C_{12}$, vorzugsweise von $C_1$ bis $C_8$, ist, wobei das Disulfid im besonderen der allgemeinen Formel $(HOOC)_x$-$R_3$-S-S-$R_3$-$(COOH)_x$ entspricht.

**21.** Mutterlösung nach Anspruch 20, **dadurch gekennzeichnet, dass** in den allgemeinen Formeln für das Funktionalisierungsmittel die Radikale $R_1$ und $R_3$ gesättigte geradkettige oder verzweigte aliphatische Radikale mit $C_1$ bis $C_{12}$, vorzugsweise $C_1$ bis $C_8$ und insbesondere $C_1$ bis $C_6$, ungesättigte geradkettige oder verzweigte aliphatische Radikale mit $C_2$ bis $C_{12}$, vorzugsweise $C_2$ bis $C_8$ und ganz besonders $C_2$ bis $C_6$, cyclo-aliphatische Radikale mit $C_4$ bis $C_{12}$, vorzugsweise $C_6$ bis $C_8$, oder aromatische Radikale mit $C_6$ bis $C_{12}$, vorzugsweise $C_6$ bis $C_8$, sind, wohingegen die Radikale $R_2$ gesättigte geradkettige oder verzweigte aliphatische Radikale mit $C_2$ bis $C_{12}$, vorzugsweise $C_2$ bis $C_8$ und insbesondere $C_2$ bis $C_6$, ungesättigte geradkettige oder verzweigte aliphatische Radikale mit $C_2$ bis $C_{12}$, vorzugsweise $C_2$ bis $C_8$ und ganz besonders $C_2$ bis $C_6$, cyclo-aliphatische Radikale mit $C_4$ bis $C_{12}$, vorzugsweise $C_6$ bis $C_8$, oder auch aromatische Radikale mit $C_6$ bis $C_{12}$, vorzugsweise $C_6$ bis $C_8$, sind.

**22.** Mutterlösung nach Anspruch 20 oder 21, **dadurch gekennzeichnet, dass** in den allgemeinen Formeln für das Funktionalisierungsmittel die einwertigen Radikale R gesättigte geradkettige oder verzweigte aliphatische Radikale mit $C_1$ bis $C_{12}$, vorzugsweise $C_1$ bis $C_8$, ungesättigte geradkettige oder verzweigte aliphatische Radikale mit $C_2$ bis $C_{12}$, vorzugsweise $C_2$ bis $C_8$, cyclo-aliphatische Radikale mit $C_4$ bis $C_{12}$, vorzugsweise $C_6$ bis $C_8$, oder auch aromatische Radikale mit $C_6$ bis $C_{12}$, vorzugsweise $C_6$ bis $C_8$ sind, wobei die Radikale R ganz besonders geradkettige oder verzweigte Alkylgruppen mit $C_1$ bis $C_{12}$ und ganz besonders $C_1$ bis $C_8$ sind.

**23.** Mutterlösung nach einem der Ansprüche 20 bis 22, **dadurch gekennzeichnet, dass** das Elastomer aus der Gruppe der statistischen oder sequenzierten Kopolymere aus Styrol und einem konjugierten Dien gewählt wird, wobei das Dien insbesondere ein Stoff wie Butadien, Isopren, Chloropren, carboxylhaltiges Butadien oder carboxylhaltiges Isopren ist, wobei die Kopolymere insbesondere einen Styrolgehalt aufweisen, der bis zu 5 Gew.-% bis 50 Gew.-% reicht.

**24.** Mutterlösung nach Anspruch 24, **dadurch gekennzeichnet, dass** die mittlere gewichtsbezogene molekulare Masse des Kopolymers aus Styrol und konjugiertem Dien zwischen 10.000 und 600.000 Dalton und vorzugsweise zwischen 30.000 und 400.000 Dalton liegt.

**25.** Mutterlösung nach einem der Ansprüche 20 bis 24, **dadurch gekennzeichnet, dass** das kohlenwasserstoffhaltige Öl aus der Gruppe der Erdölschnitte der aromatischen Art, der Erdölschnitte der naphthen-aromatischen Art, der Erdölschnitte von der Art von Naphthen-Paraffinen, der Erdölschnitte von der Art der Paraffine, der Steinkohleöle und der Öle pflanzlichen Ursprungs gewählt wird.

**26.** Mutterlösung nach einem der Ansprüche 20 bis 25, **dadurch gekennzeichnet, dass** sie, bezogen auf das Gewicht des kohlenwasserstoffhaltigen Öls, zwischen 5 % und 40 % Elastomer, zwischen 0,05 % und 10 % Funktionalisierungsmittel und, bezogen auf das Gewicht des Elastomers, zu 0 % bis 15 % die Superoxid enthaltende Verbindung enthält.

**27.** Mutterlösung nach Anspruch 26, **dadurch gekennzeichnet, dass** sie, bezogen auf das Gewicht des kohlenwasserstoffhaltigen Öls, zwischen 10 % und 30 % Elastomer, zwischen 0,1 % und 8 % Funktionalisierungsmittel und, bezogen auf das Gewicht des Elastomers, zu 0 % bis 10 % die Superoxid enthaltende Verbindung enthält.

## Claims

**1.** A process for preparing bitumen/functionalised elastomer compositions with a wide plasticity range, of the type in which a bitumen or bitumen mixture is brought into contact, at temperatures of between 100°C and 230°C and with stirring, for a period of at least ten minutes, with, by weight of the bitumen, between 0.5 % and 25 % of an elastomer and between 0.01 % and 6 % of a functionalising agent, said process being **characterised in that** the functionalising agent consists of at least one compound of one or the other of the formulae

(a) 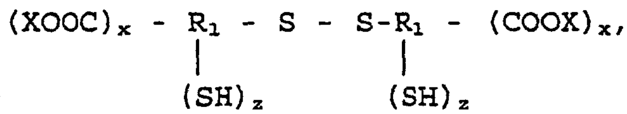

(b) 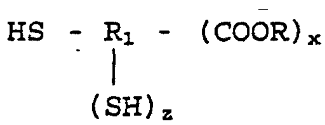 and (c) 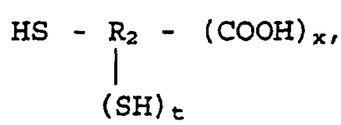

in which X represents a hydrogen atom or a radial R, each $R_1$ denotes a $C_1$ to $C_{12}$, preferably $C_1$ to $C_8$ (x+z+1)-valent hydrocarbon radical, R represents a $C_1$ to $C_{12}$, preferably $C_1$ to $C_8$ monovalent hydrocarbon radical, $R_2$ denotes a $C_2$ to $C_{12}$, preferably $C_2$ to $C_8$ (x+t+1)-valent hydrocarbon radical, t is zero or 1, each x denotes a whole number with a value of between 1 and 3, preferably equal to 1 or 2, and z is zero or 1, with $x+z \leq 3$.

**2.** A process according to claim 1, **characterised in that** the functionalising agent consists of at least one disulfide of the formula $(XOOC)_x\text{-}R_3\text{-S-S-}R_3\text{-}(COOX)_x$, where X denotes H or a radical R, x is a whole number between 1 and 3, preferably equal to 1 or 2, and $R_3$ represents a $C_1$ to $C_{12}$, preferably $C_1$ to $C_8$ (x+1)-valent hydrocarbon radical, said disulfide having more particularly the formula $(HOOC)_x\text{-}R_3\text{-S-S-}R_3\text{-}(COOH)_x$.

**3.** A process according to claim 1 or claim 2, **characterised in that**, in the formulae of the functionalising agent, the radicals R1 and R3 are $C_1$ to $C_{12}$, preferably $C_1$ to $C_8$ and most particularly $C_1$ to $C_6$ saturated, linear or branched aliphatic radicals, $C_2$ to $C_{12}$, preferably $C_2$ to $C_8$ and most particularly $C_2$ to $C_6$ unsaturated, linear or branched aliphatic radicals, $C_4$ to $C_{12}$, preferably $C_6$ to $C_8$ cycloaliphatic radicals or $C_6$ to $C_{12}$, preferably $C_6$ to $C_8$ aromatic radicals, while the radicals $R_2$ are $C_2$ to $C_{12}$, preferably $C_2$ to $C_8$ and most particularly $C_2$ to $C_6$ saturated, linear or branched aliphatic radicals, $C_2$ to $C_{12}$, preferably $C_2$ to $C_8$ and most particularly $C_2$ to $C_6$ unsaturated, linear or branched aliphatic radicals, $C_4$ to $C_{12}$, preferably $C_6$ to $C_8$ cycloaliphatic radicals or $C_6$ to $C_{12}$, preferably $C_6$ to $C_8$ aromatic radicals.

**4.** A process according to one of claims 1 to 3, **characterised in that**, in the formulae of the functionalising agent,

the monovalent radicals R are $C_1$ to $C_{12}$, preferably $C_1$ to $C_8$ saturated, linear or branched aliphatic radicals, $C_2$ to $C_{12}$, preferably $C_2$ to $C_8$ unsaturated, linear or branched aliphatic radicals, $C_4$ to $C_{12}$, preferably $C_6$ to $C_8$ cycloaliphatic radicals or $C_6$ to $C_{12}$, preferably $C_6$ to $C_8$ aromatic radicals, said radicals R being most particularly $C_1$ to $C_{12}$ and more especially $C_1$ to $C_8$ linear or branched alkyl radicals.

**5.** A process according to one of claims 1 to 4, **characterised in that** the functionalising agent is used in an amount between 0.05 % and 3 % by weight of the bitumen.

**6.** A process according to one of claims 1 to 5, **characterised in that** the amount of elastomer is between 1 % and 15 % by weight of the bitumen.

**7.** A process according to one of claims 1 to 6, **characterised in that** the bitumen or bitumen mixture is selected from among bitumens having a kinematic viscosity at 100°C of between $0.5x10^{-4}$ $m^2/s$ and $3x10^{-2}$ $m^2/s$ and preferably between $1x10^{-4}$ $m^2/s$ and $2x10^{-2}$ $m^2/s$.

**8.** A process according to claim 7, **characterised in that** the bitumen or bitumen mixture exhibits a penetrability at 25°C, defined according to standard NF T 66004, of between 5 and 800 and preferably between 10 and 400.

**9.** A process according to one of claims 1 to 8, **characterised in that** the elastomer is selected from among random or sequential copolymers of styrene and a conjugated diene, said diene in particular being such as butadiene, isoprene, chloroprene, carboxylated butadiene, carboxylated isoprene.

**10.** A process according to claim 9, **characterised in that** the styrene and conjugated diene copolymer comprises, by weight, 5 % to 50 % of styrene.

**11.** A process according to claim 9 or claim 10, **characterised in that** the weight average molecular mass of the styrene and conjugated diene copolymer is between 10,000 and 600,000 daltons and preferably between 30,000 and 400,000 daltons.

**12.** A process according to one of claims 1 to 11, **characterised in that** a peroxidised compound, in particular a dihydrocarbyl peroxide, generating free radicals at temperatures of between 100°C and 230°C, is added to the reaction medium formed of the bitumen or bitumen mixture, the elastomer and the functionalising agent, said peroxidised compound being used in an amount in particular of up to 15 % by weight of the elastomer.

**13.** A process according to one of claims 1 to 12, **characterised in that** the bitumen or bitumen mixture is brought into contact with the elastomer, the functionalising agent and, if used, the peroxidised compound by firstly incorporating the elastomer into the bitumen or bitumen mixture, at temperatures of between 100°C and 230°C, more particularly between 120°C and 190°C and with stirring, for a period of a few tens of minutes to several hours, in particular 30 minutes to 8 hours, to form a homogeneous mixture of bitumen and elastomer, then by introducing into said mixture the functionalising agent and then, if used, the peroxidised compound in suitable amounts, while continuing to stir the whole at temperatures of between 100°C and 230°C, more particularly between 120°C and 190°C, which may or may not be identical to the temperatures at which the elastomer was incorporated into the bitumen or bitumen mixture, for a period of at least 10 minutes and generally ranging from 10 minutes to 5 hours, more particularly from 30 minutes to 180 minutes, to form a reaction product constituting the bitumen/functionalised elastomer composition.

**14.** A process according to claim 13, **characterised in that** said reaction product constituting the bitumen/functionalised elastomer composition has added to it, with stirring at temperatures of between 100°C and 230°C, more particularly between 120°C and 190°C, one or more additives capable of reacting with the carboxyl functional groups or carboxyl esters borne by the elastomer and optionally by the bitumen, said reactive additives being in particular primary or secondary amines, especially polyamines, alcohols, especially polyols, aminoalcohols, epoxides or metal compounds, especially composed of metals from groups I, II, III or VIII of the Periodic Table of Elements.

**15.** A process according to claim 14, **characterised in that** the amount of reactive additive or additives incorporated into said reaction product represents 0.01 % to 10 % and more particularly 0.05 % to 5 % of the weight of the bitumen contained in the reaction product.

**16.** A process according to one of claims 1 to 15,
**characterised in that** the reaction medium formed by bringing into contact the bitumen or bitumen mixture, the elastomer, the functionalising agent and, if used, the peroxidised compound or the reaction product resulting from said bringing into contact has added to it, with stirring at temperatures of between 100°C and 230°C and more particularly between 120°C and 190°C, from 1 % to 40 %, and more especially from 2 % to 30 %, by weight of bitumen, of a fluxing agent, said fluxing agent being in particular a hydrocarbon oil having a distillation range at atmospheric pressure, determined to standard ASTM D 86-67, of between 100°C and 600°C and situated more especially between 150°C and 400°C.

**17.** A process according to claim 16, **characterised in that** the elastomer, the functionalising agent and optionally, if used, the peroxidised compound are incorporated into the bitumen or bitumen mixture in the form of a mother solution of these products in the hydrocarbon oil in particular selected to constitute the fluxing agent.

**18.** A process according to claim 17, **characterised in that** the mother solution, comprising the elastomer, the functionalising agent and, if used, the peroxidised compound, is mixed with the bitumen or bitumen mixture, at temperatures of between 100°C and 230°C, more particularly between 120°C and 190°C and with stirring, then the resultant mixture is kept, with stirring, at temperatures of between 100°C and 230°C, more particularly between 120°C and 190°C, for a period of at least 10 minutes and generally ranging from 10 minutes to 90 minutes, to form a reaction product constituting the bitumen/functionalised elastomer composition.

**19.** Application of the bitumen/functionalised elastomer compositions obtained by the process according to one of claims 1 to 18, to the production of bitumen/functionalised elastomer binders, said binders consisting of said compositions used as they are or being formed by dilution of said bitumen/functionalised elastomer compositions with a bitumen or bitumen mixture or with another bitumen/functionalised elastomer composition according to one of claims 1 to 18 having different characteristics, which bitumen/functionalised elastomer binders may in particular be used, directly or after conversion into an aqueous emulsion, for the production of road paving of the surface coating type, for the production of hot or cold paving mixes or for the production of waterproof paving.

**20.** A mother solution, usable in particular for the preparation of bitumen/functionalised elastomer composition, comprising (i) a hydrocarbon oil, which has a distillation range at atmospheric pressure, determined to standard ASTM D 86-87, of between 100°C and 600°C and more particularly between 150°C and 400°C and (ii) an elastomer, **characterised in that** said mother solution also comprises, in solution, a functionalising agent and optionally a peroxidised compound, said functionalising agent consists of at least one compound of one or the other of the formulae

(a) 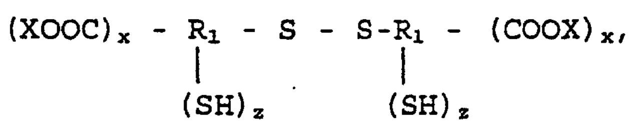

(b) 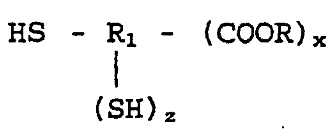 and (c) 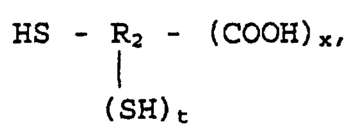

in which X represents a hydrogen atom or a radial R, each $R_1$ denotes a $C_1$ to $C_{12}$, preferably $C_1$ to $C_8$ (x+z+1)-valent hydrocarbon radical, R represents a $C_1$ to $C_{12}$, preferably $C_1$ to $C_8$ monovalent hydrocarbon radical, $R_2$ denotes a $C_2$ to $C_{12}$, preferably $C_2$ to $C_8$ (x+t+1)-valent hydrocarbon radical, t is zero or 1, each x denotes a whole number with a value of between 1 and 3, preferably equal to 1 or 2, and z is zero or 1, with $x+z \leq 3$, said functionalising agent consisting more particularly of at least one disulfide of the formula $(XOOC)_x$-$R_3$-S-S-$R_3$-$(COOX)_x$, where X denotes H or a radical R, x is a whole number between 1 and 3, preferably equal to 1 or 2, and $R_3$ represents a $C_1$ to $C_{12}$, preferably $C_1$ to $C_8$ (x+1)-valent hydrocarbon radical, said disulfide having more particularly the formula $(HOOC)_x$-$R_3$-S-S-$R_3$-$(COOH)_x$.

**21.** A mother solution according to claim 20, **characterised in that**, in the formulae of the functionalising agent, the radicals $R_1$ and $R_3$ are $C_1$ to $C_{12}$, preferably $C_1$ to $C_8$ and most particularly $C_1$ to $C_6$ saturated, linear or branched

aliphatic radicals, $C_2$ to $C_{12}$, preferably $C_2$ to $C_8$ and most particularly $C_2$ to $C_6$ unsaturated, linear or branched aliphatic radicals, $C_4$ to $C_{12}$, preferably $C_6$ to $C_8$ cycloaliphatic radicals or $C_6$ to $C_{12}$, preferably $C_6$ to $C_8$ aromatic radicals, while the radicals $R_2$ are $C_2$ to $C_{12}$, preferably $C_2$ to $C_8$ and most particularly $C_2$ to $C_6$ saturated, linear or branched aliphatic radicals, $C_2$ to $C_{12}$, preferably $C_2$ to $C_8$ and most particularly $C_2$ to $C_6$ unsaturated, linear or branched aliphatic radicals, $C_4$ to $C_{12}$, preferably $C_6$ to $C_8$ cycloaliphatic radicals or $C_6$ to $C_{12}$, preferably $C_6$ to $C_8$ aromatic radicals.

**22.** A mother solution according to claim 20 or claim 21,
**characterised in that** in the formulae of the functionalising agent, the monovalent radicals R are $C_1$ to $C_{12}$, preferably $C_1$ to $C_8$ saturated, linear or branched aliphatic radicals, $C_2$ to $C_{12}$, preferably $C_2$ to $C_8$ unsaturated, linear or branched aliphatic radicals, $C_4$ to $C_{12}$, preferably $C_6$ to $C_8$ cycloaliphatic radicals or $C_6$ to $C_{12}$, preferably $C_6$ to $C_8$ aromatic radicals, said radicals R being most particularly $C_1$ to $C_{12}$ and more especially $C_1$ to $C_8$ linear or branched alkyl radicals.

**23.** A mother solution according to one of claims 20 to 22,
**characterised in that** the elastomer is selected from among random or sequential copolymers of styrene and a conjugated diene, in particular isoprene, chloroprene, butadiene, carboxylated butadiene and carboxylated isoprene, said copolymers having in particular a styrene content ranging from 5 % to 50 % by weight.

**24.** A mother solution according to claim 24, **characterised in that** the weight average molecular mass of the styrene and conjugated diene copolymer is between 10,000 and 600,000 daltons and preferably between 30,000 and 400,000 daltons.

**25.** A mother solution according to one of claims 20 to 24,
**characterised in that** the hydrocarbon oil is selected from petroleum cuts of aromatic nature, petroleum cuts of naphtheno-aromatic nature, petroleum cuts of naphthenic/paraffinic nature, petroleum cuts of paraffinic nature, coal oil and oils of vegetable origin.

**26.** A mother solution according to one of claims 20 to 25,
**characterised in that** it comprises, by weight of the hydrocarbon oil, between 5 % and 40 % of elastomer, between 0.05 % and 10 % of functionalising agent and, by weight of elastomer, 0 % to 15 % of peroxidised compound.

**27.** A mother solution according to claim 26, **characterised in that** it comprises, by weight of hydrocarbon oil, between 10 % and 30 % of elastomer, between 0.1 % and 8 % of functionalising agent and, by weight of elastomer, 0 % to 10 % of peroxidised compound.